# EUROPÄISCHE PATENTSCHRIFT

(11) **EP 0 471 871 B1**
(45) Veröffentlichungstag und Bekanntmachung des Hinweises auf die Patenterteilung: **05.01.1994**
(21) Anmeldenummer: 90116106.7
(22) Anmeldetag: 22.08.1990
(51) Int. Cl.: B60R 21/32

(54) **Anordnung von Geräten für den Insassenschutz in einem Fahrzeug**
Arrangement of devices for the protection of vehicle occupants
Disposition d'appareils pour la protection des passagers d'un véhicule

(43) Veröffentlichungstag der Anmeldung: 26.02.1992
(73) Patentinhaber: SIEMENS AKTIENGESELLSCHAFT, 80333 München (DE)
(72) Erfinder: Neugebauer, Dieter, Dipl.-Ing., D-8413 Regenstauf (DE)

(56) Entgegenhaltungen:
- DE-A- 3 811 217
- FR-A- 2 346 758
- US-A- 4 907 222

## Beschreibung

Die Erfindung betrifft eine Anordnung von Geräten für den Insassenschutz in einem Fahrzeug, wobei dessen Insassen bei einem Crash durch mehrere, mittels einer elektrisch gezündeten Sprengladung aktivierte Schutzeinrichtungen geschützt werden sollen. Bei den Schutzeinrichtungen handelt es sich also z.B. um Airbags, Überrollbügel und / oder Gurtstrammer.

Solche Anordnungen sind in sehr großer Zahl bekannt, auch solche, welche, zur vorsorglichen Speicherung der für eine Zündung der Sprengladung nötigen Energie, einen Zündkondensator enthalten, welcher die Sprengladung auch dann zünden kann, wenn beim Crash die allgemeine Stromversorgung des Fahrzeuges, also das Bordnetz, zerstört bzw. versagte.

Die Erfindung geht von der sehr viel spezielleren, im Oberbegriff des Patentanspruches 1 definierten Schaltung einer Anordnung aus, die mehrere , über das Fahrzeug verteilte Zündeinheiten enthält, wobei die Schaltungen der Zündeinheiten ihrerseits jeweils einen oder mehrere eigene Zündkondensatoren enthalten.

Solche Anordnungen bzw. solche Schaltungen dieser Anordnung wurden vergleichsweise selten bekannt, obwohl darüber teilweise schon vor vielen Jahren berichtet wurde, vgl.
- die DE-A-23 09 111,
- die EP-A1-0 339 967 und
- die unveröffentlichte Patentanmeldung PCT/DE 90/00125.

Daneben wurde eine hohe Vielzahl von Beschreibungen über ein anderes Thema, nämlich über verschiedene Aspekte von Datenleitungen zur seriellen digitalen Übertragung von Daten zwischen Geräten und Einzelteilen in Fahrzeugen, veröffentlicht. Z.B. betreffen
- die Druckschrift Bosch Techn. Berichte 5 (1975) H. 2, S. 91 bis 96,
- die Druckschrift C 192/81 (Lin et al., Multiplexed Wiring in the Automobile : a Near-Term Possibility) in Third International Conf. on Automotive Electronics, I Mech E Conf. Public. 1981-10, (20-23 Oct., 1981 at the IEE, London),
- die Druckschrift SAE 860391 (Kiencke et al., Automotive Serial Controller Area Network, 1986),
- die DE-A1-35 20 516,
- die DE-A1-37 30 468,
- die EP-B1-0 051 849,
- die EP-B1-0 082 300,
- die EP-B1-0 113 478,
- die EP-A2-0 131 450,
- die EP-A2-0 136 398,
- die EP-A2-0 218 557,

besonders die Sicherheit des Betriebes, bzw. die Überwachung der Betriebsicherheit, von Systemen mit solchen Datenleitungen in Fahrzeugen.

Die Aufgabe der Erfindung,
- mit wenig Aufwand eine geschickte räumliche Verteilung der Bestandteile der Anordnung zu erreichen,
- zudem niedrige Ströme und eine hohe Störsicherheit auch auf langen Leitungen zwischen der Auswerteeinheit und der Zündeinheit der auszulösenden Schutzeinrichtung zu erreichen,
- ohne im Crashfalle die Zuverlässigkeit und Schnelligkeit der Auslösung der Schutzeinrichtung mit genügend steilen, ausreichend hohen Stromimpulsen zu gefährden,

wird erfindungsgemäß durch den im Patentanspruch 1 definierten Gegenstand gelöst.

Die Erfindung betrifft also vor allem die geschickte räumliche Verteilung, die Verdrahtung und den Betrieb der wichtigsten Bestandteile der im Oberbegriff des Patentanspruches 1 definierten Anordnung mit mehreren Zündkondensatoren.

Die in den Unteransprüchen definierten zusätzlichen Maßnahmen gestatten, jeweils für sich zusätzliche Vorteile zu erreichen. U.a. gestatten nämlich die Maßnahmen gemäß dem Patentanspruch
- 2,: bei hoher Zuverlässigkeit der hier elektrischen - statt z.B. rein optischen - Datenleitung zusätzlich die Aufladung der Zündkondensatoren auf besonders einfache Weise zu ermöglichen, - wobei dann im Prinzip sogar die ganze Stromversorgung der betreffenden Zündgeräte ebenfalls über die Datenleitung möglich ist,
- 3,: den Crashsensor bzw. die Crashsensoren zusammen mit dem Auswertegerät zentral im Fahrzeug an einer so geschützten Stelle anzubringen, daß diese zentral angebrachten Bestandteile der Anordnung zumindest in der Anfangsphase des Crashes relativ gut gegen Beschädigungen geschützt sind, so daß sie dann im Prinzip
· für noch ausreichend lange Zeit Daten über die Datenleitung aussenden können und
· damit sehr zuverlässig die Auslösung veranlassen können, nämlich rechtzeitig ausreichend steile Hochstrom-Impulse zur Zündung der Sprengladungen mittels der Zündkondensatoren auslösen können,
- 4,: auch den Fahrer mit einem Airbag zu schützen, wobei das zum Fahrerairbag gehörende Zündgerät zusammen mit der Auswerteeinheit in einem gemeinsamen abgeschirmten Gehäuse angebracht sein kann,
- 5,: rasche, für die Zündgeräte leicht interpretierbare Übertragungen über die Datenleitung zu erreichen,
- 6,: im Crashfalle rasch relativ geringe Datenmengen seriell über die Datenleitung übertragen zu können und trotzdem eine ausreichend individuell unterschiedliche Steuerung der verschiedenen Zündgeräte und damit eine individuell unterschiedliche Steuerung der diesen Zündgeräten zugeordneten Schutzeinrichtungen zu ermöglichen,
- 7,: mit wenig Aufwand eine präzis arbeitende Anordnung zu erreichen, welche flexibel an die besonderen Verhältnisse des jeweils betreffenden Fahrzeugtypes anpaßbar ist, und
- 8,: eine ausreichend präzise Diagnose der Art und der Schwere des Crashes bereits mit einem einzigen Crashsensor zu ermöglichen.

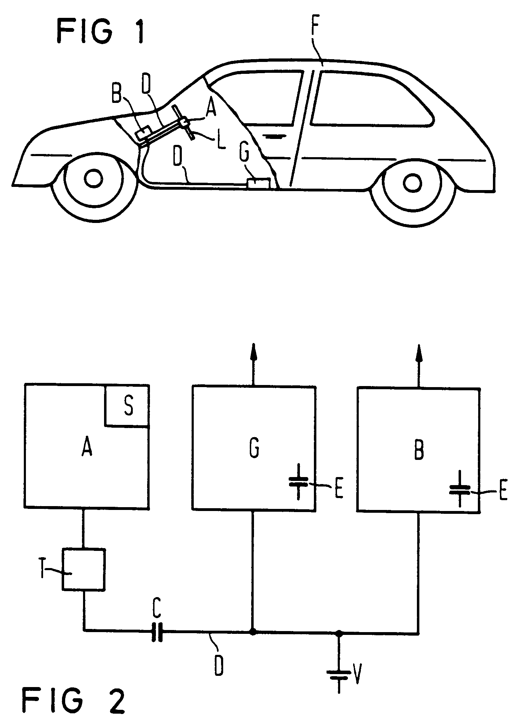

Die Erfindung und ihre Weiterbildungen werden anhand des in den Figuren gezeigten Schemas eines Beispieles der Erfindung weiter erläutert. Dabei zeigt die Figur
1 die in einem KFZ angebrachte Anordnung, und
2 die Schaltung der in der Figur 1 gezeigten Anordnung.

Bei der Erfindung sollen alle Zündeinheiten möglichst nahe bei den verschiedenen Sprengladungen der Schutzeinrichtungen angebracht sein, also räumlich im Fahrzeug entsprechend verteilt sein. Alle Zündeinheiten sollen aber möglichst von einer einzigen Auswerteeinheit gemeinsam angesteuert werden. Trotzdem soll die Erfindung zulassen, daß die einzelnen Zündeinheiten mit wenig Aufwand individuell verschieden und damit optimal angesteuert können. Ferner sollen die Sprengladungen im Crashfalle jeweils zuverlässig, nämlich rasch und rechtzeitig mit ausreichender Energie, zünden. Dies erforderte auch eine geschickte Verteilung, eine geschickte Verdrahtung und einen geschickten Betrieb der zur Anordnung gehörenden Bestandteile.

Wenn im Fahrzeug mehrere verschiedene, durch Sprengladungen auslösbare Schutzeinrichtungen wie Airbags und / oder Gurtstrammer angebracht sind, ist der Aufwand für die Crashsensoren und für die Auswertung der von diesen gelieferten Sensorsignale groß, wenn man nicht möglichst alle Sprengladungen von einem gemeinsamen Crashsensor oder einer gemeinsamen Gruppe von Crashsensoren aus ansteuert. Die Erfindung soll deshalb mit geringem Aufwand nur einen einzigen Crashsensor oder nur wenige, zentral bei der Auswerteeinheit angebrachte Crashsensoren benötigen. Die Erfindung dient also u.a. auch dazu, den Aufwand an Crashsensoren und an den jeweils dazugehörigen Auswerteeinheiten besonders klein zu machen.

Die Erfindung soll, aufgeteilt in drei Abschnitte, weiter erläutert werden, nämlich aufgeteilt in die Abschnitte 1. Crashsensor/Auswerteeinheit, 2. Zündeinheiten/Zündkondensatoren und 3. die Art und den Betrieb der dazwischen angebrachten Leitung. 1. Die Figur 1 zeigt beispielhaft eine erfindungsgemäße Anordnung von Geräten A, B und G für einen solchen Insassenschutz in einem KFZ F, dessen Insassen bei einem Crash durch rasch aktivierbare Schutzeinrichtungen geschützt werden sollen.

Zur Erhöhung der Zuverlässigkeit sollen möglichst keine Störsignale in die Leitungen zwischen dem Crashsensor und der Auswerteeinheit ohmisch, kapazitiv, induktiv und / oder elektromagnetisch eingekoppelt werden können. Bei der Erfindung ist daher der Crashsensor, vgl. S in der Figur 2, bzw. sind daher die Crashsensoren S, nahe an dem oder unmittelbar in dem die Auswerteeinheit A enthaltenden abgeschirmten Gehäuse A, also nahe am oder im Auswertegerät A mitangebracht.

Die in beiden Figuren gezeigte Anordnung enthält daher mindestens einen Crashsensor S, der im gezeigten Beispiel im Inneren des hier zentral im Lenkrad L angebrachten Auswertegerätes A befestigt ist. Dieses Auswertegerät A empfängt im Crashfalle weitestgehend störungsfrei die Sensorsignale und wertet diese Sensorsignale zentral sofort aus - d.h. dieses Auswertegerät A bestimmt in möglichst aussagekräftiger Weise die Art und / oder die Schwere des Crashes und meldet diese Auswertung bzw. entsprechende Daten an die dezentral angebrachten Zündeinheiten, vgl. B und G, weiter.

Man kann dadurch vor allem aber zusätzlich erreichen, daß der Crashsensor S zusammen mit dem Auswertegerät A zentral im Fahrzeug an einer so geschützten Stelle angebracht sind, daß diese zentralen Bestandteile S und A der Anordnung zumindest in der Anfangsphase des Crashes relativ gut gegen Beschädigungen geschützt sind. Dadurch bleiben sie zumindest in der wichtigen Anfangsphase des Crashes zur Übertragung von Daten über die Datenleitung D geeignet.

2. Diese Zündeinheiten B und G sind ihrerseits nahe an den von ihnen jeweils auszulösenden Sprengladungen, und zwar jeweils in eigenen abgeschirmten Gehäusen B und G, angebracht und bilden also eigene Geräte B und G. Diese Zündgeräte B und G zünden die dortigen Sprengladungen mittels der in ihnen oder bei ihnen, also dezentral, mitangebrachten Zündkondensatoren E elektrisch. Bei der Erfindung sind also die verschiedenen, in den Zündgeräten mitenthaltenen Zündkondensatoren E möglichst in der Nähe der von ihnen auszulösenden Sprengladungen angebracht. Das hat u.a. den Vorteil, daß die Zündleitungen zwischen den Zündkondensatoren E und den zugeordneten Schutzeinrichtungen jeweils auch sehr kurz und relativ dünn gemacht werden können, also einen relativ niedrigen ohmschen und induktiven Zündleitungswiderstand aufweisen können. Bei der Erfindung können also im Crashfalle die Zündkondensatoren E verlustarm und kaum verzögert hohe Stromimpulse mit steilen Anstiegsflanken über kurze, dünne Zündleitungen an die Sprengladungen der Schutzeinrichtungen, bzw. an die Zündpillen dieser Sprengladungen abgeben. Dadurch, daß vermieden wird, die Zündkondensatoren E nur zentral mit im Auswertegerät A anzubringen, daß also vermieden wird, die Auslöseeinheit A und die Zündkondensatoren E zusammen mit den die Zündkondensatoren steuernden Zündeinheiten B und G räumlich völlig zu trennen, kann man hohe induktive, kapazitive und ohmsche Widerstände der Zündleitungen, vgl. D in den Figuren, vermeiden und erreichen, daß die auslösenden Hochstrom-Impulse der Zündkondensatoren E über die Zündleitungen mit besonders geringen Verlusten und mit besonders steilen Anstiegsflanken zu den Sprengladungen weitergeleitet werden.

Beide Zündgeräte B und G lösen je nach Bedarf ihrerseits die Schutzeinrichtungen entsprechend der Art und der Schwere des Crashes aus. Die Erfindung läßt es nämlich zu, die Anordnung so zu dimensionieren, daß die verschiedenen Zündgeräte B und G im Crashfalle zu verschiedenen Zeiten reagieren, ja daß dann evtl. überhaupt nur ein Teil der insgesamt vorhandenen Zündgeräte eine Sprengung auslöst. Die Erfindung läßt es also auch zu, daß die einzelnen Zündgeräte optimal, nämlich je nach Bedarf, unterschiedlich auf die Sensorsignale, also unterschiedlich auf den Crash reagieren. Die Erfindung läßt es hierbei zu,
- daß entweder schon das Auswertegerät A festlegt, ob ausgelöst werden soll, und wenn ja dann welche Zündgeräte zu welcher Zeit auslösen sollen,
- oder daß das Auswertegerät A nur die Sensorsignale auf Art und / oder Schwere des Crashes hin analysiert und die Analysenergebnisse an die Zündgeräte weitermeldet, wobei die Zündgeräte selbst entscheiden, ob und wann sie auslösen.

Im Fahrzeug F sind, um die Figuren nicht unübersichtlich zu machen, nur zwei dezentral angebrachte Zündgeräte B und G gezeigt. Diese Zündgeräte B und G sind räumlich voneinander getrennt, also über das Fahrzeug F verteilt, angebracht. Das erste Zündgerät B ist beispielhaft neben dem Beifahrersitz angebracht, um, veranlaßt vom zentralen Auswertegerät A, im Crashfalle einen Beifahrerairbag auszulösen, also um die Sprengladung dieses Airbag zu zünden. Das zweite Zündgerät G ist beispielhaft nahe an Gurtstrammern angebracht, um, ebenfalls veranlaßt vom zentralen Auswertegerät A, im Crashfalle den betreffenden Gurtstrammer auszulösen, also um die Sprengladung des betreffenden Gurtstrammerantriebes zu zünden.

3. Die Figuren zeigen beispielhaft, daß bei der Erfindung die Leitung zwischen dem Auswertegerät A und den Zündgeräten B und G eine für serielle digitale Übertragungen bestimmte - elektrische oder optische - Datenleitung D ist, die also einen elektrisch leitenden Draht oder eine Glasfaser enthält. Dementsprechend sind zumindest die von dem Auswertegerät A abgegebenen, von den Zündgeräten B und G empfangenen und verarbeiteten Signale jeweils digitale Signale. Eine solche digitale Datenübertragung zwischen den Geräten A, B und G ist - bei sinnvoller Verlegung im KFZ, besonders unter Berücksichtigung der evtl. von der Motorzündung ausgehenden Störungen - besonders störunanfällig und kann die Daten mit kleinen Leistungen übertragen. Wenn das Auswertegerät A, wie in der Figur 1 gezeigt, hierbei im Lenkrad L angebracht ist, kann die Datenleitung L, wie in der Figur 2 angedeutet ist, zwischen dem Lenkrad L und dem an der Karosserie verlegten Rest der Datenleitung D eine die Drehbewegung des Lenkrades L auffangende Zwischeneinheit T eingefügt sein, also z.B. in für sich bekannter Weise ein Schleifring T, ein Übertrager T oder eine spiralig gewickelte Zwischenleitung T.

Bei der Erfindung ist der Aufwand für die ganze Anordnung verhältnismäßig gering : statt in den einzelnen Zündgeräten B und G eigene Crashsensoren und eigene, die Sensorsignale auswertende Auswerteschaltungen anzubringen, ist erfindungsgemäß der Crashsensor und die Auswerteeinheit nur ein einziges Mal, nämlich zentral, angebracht. Die Zündgeräte B und G übernehmen die zentral vom Auswertegerät ausgewerteten Daten.

Darüber hinaus ist bei der Erfindung auch die rasche Auslösung besonders gut gewährleistet : Würde man auch die in den Zündgeräten B und G dezentral angebrachten Schaltungen mit in das Auswertegerät A integrieren und lange Zündleitungen zu den dezentralen Schutzeinrichtungen, also z.B. zu den dortigen Sprengladungen, anbringen, dann würde der ohmsche und der induktive Widerstand dieser langen Zündleitungen ungünstig groß und zudem von der Länge der betreffenden Zündleitung abhängig, was sich ungünstig auf die Steilheit der über die Zündleitungen zu übertragenden Hochstrom-Impulse auswirkt. Bei der Erfindung werden hingegen die Hochstrom-Impulse von den dezentral angeordneten Zündgeräten erzeugt, wodurch die Schwierigkeiten wegen des ohmschen und induktiven Widerstandes der Zündleitungen entfallen. Diese dezentralen Zündgeräte B und G können zusätzlich eigene große Kondensatoren als Energiereserven aufweisen, um rasch dort die Hochstrom-Impulse erzeugen zu können.

Bei der Erfindung sind die Geräte A, B und G über eine Datenleitung D verdrahtet, vgl. die damit gemäß Figur 2 erreichte Schaltung. Durch die Verwendung der Datenleitung D zur Übertragung digitaler Signale können die Daten im Crashfalle mit relativ geringen Strömen nicht nur weitgehend störungsfrei, sondern auch mit ausreichender Schnelligkeit übertragen werden.

Im Prinzip läßt die Erfindung zu, eine Glasfaser als digital betriebene Datenleitung D mit Zeitschlitzen zur Übertragung der digitalen Daten zu verwenden (und zwar bei Bedarf sowohl in Hinrichtung als auch in Rückrichtung, also von Zündgeräten zum zentralen Auswertegerät A, das dann z.B. zentral eine Protokollierung über die Zustände der Zündgeräte B und g durchführt). Eine solche optische Datenleitung D ist besonders sicher gegen elektrische, magnetische und ohmsche Störungen.

Die Erfindung läßt aber auch zu, als Datenleitung D eine abgeschirmte elektrische Busleitung D mit Zeitschlitzen zur Übertragung der digitalen Daten zwischen dem Auswertegerät A und den Zündgeräten B, G zu verwenden . Diese abgeschirmte elektrische Busleitung D hat den mitunter beachtlichen zusätzlichen Vorteil, daß sie auf besonders einfache Weise zusätzlich gestattet, die Zündkondensatoren E der Zündgeräte B, G im Normalbetrieb des Fahrzeuges F, also vor einem Crash, - z.B. direkt vom Bordnetz 12 Volt - über die Datenleitung D auf ihre Zündspannung aufzuladen, - vgl. V in Figur 2, wobei diese Spannungsquelle V zusätzlich einen oder mehrere (ohmsche und/oder induktive) Serienwiderstände enthalten kann, um einen Kurzschluß gegen Masse für die auf der Datenleitung D übertragenen Digits zu vermeiden. Im Prinzip ist sogar die ganze Stromversorgung der betreffenden Zündgeräte B und G - im Prinzip auch des Auswertegerätes A - über die Datenleitung D möglich.

Dazu kann zusätzlich, vgl. die Figur 2, bei Bedarf ein Trennkondensator C in die Datenleitung D eingefügt werden. Die betreffenden Zündgeräte B und G können in sich auch zusätzlich Spannungsumwandler enthalten, welche jeweils die über die Datenleitung D zugeführte (Bord-)Spannung zur Aufladung des Zündkondensators E umwandeln. Über die Datenleitung D kann den Zündgeräten B und G aber z.B. statt der Bordspannung auch eine mittels eines irgendwo sonst angebrachten Spannungsumwandlers erhöhte oder erniedrigte Spannung zugeleitet werden.

Die Figur 1 zeigt ein Beispiel, bei welchem der Crashsensor S und das Auswertegerät A im Lenkrad L angebracht sind. Dadurch sind diese Bestandteile der Anordnung zentral im Fahrzeug an einer so geschützten Stelle angebracht, daß sie zumindest in der Anfangsphase des Crashes dann im Prinzip nicht nur für noch ausreichend lange Zeit gut gegen Beschädigungen geschützt sind und damit Daten über die Datenleitung aussenden können. Diese so recht gut geschützten Bestandteile können dann nämlich noch rechtzeitig ausreichend steile Hochstrom-Impulse mittels der Zündkondensatoren E zur Zündung der Sprengladungen auslösen.

Die Erfindung läßt ferner zu, daß eines der Zündgeräte, das zur Auslösung des Airbag des Fahrers dient, mit im Lenkrad L unmittelbar neben oder im Auswertegerät A mitangebracht ist, und daß die übrigen, über die Datenleitung D angeschlossenen Zündgeräte B, G jeweils nahe den von ihnen auszulösenden Beifahrerairbags, Überrollbügeln und / oder Gurtstrammern angebracht sind. Damit wird auch der Fahrer mit einem Airbag geschützt, wobei das zum Fahrerairbag gehörende Zündgerät zusammen mit der Auswerteeinheit platzsparend in einem gemeinsamen abgeschirmten Gehäuse A angebracht sein kann.

Die Datenleitung D kann an sich auch asynchron betrieben werden. Oft arbeiten aber Datenleitungen D, deren Zeitfenster starr einzelnen, von dem Auswertegerät A erfaßten, die Art und / oder die Schwere des Crashes erfassenden Kriterien zugeordnet werden, ebenso rasch, und das oft mit wenig Aufwand, wobei dann die Zeitfenster starr z.B. den Momentanamplituden und Momentanrichtungen der Bewegungen des seismischen Masse des Crashsensors S zugeordnet sein können. Durch eine solche starre Zuordnung der Zeitschlitze zu definierten Kriterien können die Zündgeräte B und G die übertragenen Daten außerdem leicht interpretieren, und zwar selbst dann, wenn das betreffende empfangende Zündgerät, das z.B. der Gurtstrammer auslösen kann, an etlichen der übertragenen Daten nicht interessiert ist, z.B. weil letztere nur Zündgeräte für Airbags betreffen.

Wenn die Zündgeräte B, G zusätzlich jeweils eine eigene Bewertungseinheit enthalten, welche individuell für das betreffende Zündgerät B, G die über die Datenleitung D empfangenen Daten daraufhin bewertet, ob und wann der zugeordnete Zündkondensator E die Schutzeinrichtung auslösen soll, können im Crashfalle rasch besonders geringe Datenmengen seriell über die Datenleitung übertragen und trotzdem eine ausreichend individuell unterschiedliche Steuerung der verschiedenen Zündgeräte und damit eine individuell unterschiedliche Steuerung der diesen Zündgeräten zugeordneten Schutzeinrichtungen erreicht werden.

Wenn die Auswerteeinheit im Auswertegerät A und die Bewertungseinheiten in den Zündgeräten B und G jeweils einen Mikroprozessor enthalten, kann letzterer jeweils leicht entsprechend den besonderen Bedürfnissen des betreffenden Fahrzeugtypes programmiert werden. Dadurch kann man also mit wenig Aufwand eine präzis arbeitende Anordnung erreichen, welche sehr flexibel an die besonderen Verhältnisse des jeweils betreffenden Fahrzeugtypes anpaßbar ist.

Wenn in der Anordnung nur ein einziger Crashsensor S angebracht wird, welcher mehrrichtungsabhängig ist, kann eine ausreichend präzise Diagnose der Art und der Schwere des Crashes bereits mit einem einzigen Crashsensor erreicht werden.

## Patentansprüche

1. Anordnung von Geräten (A, B, G) für den Insassenschutz in einem Fahrzeug (F), dessen Insassen bei einem Crash durch mehrere, mittels einer elektrisch gezündeten Sprengladung aktivierbare Schutzeinrichtungen - z.B. Airbags, Überrollbügel und / oder Gurtstrammer - geschützt werden sollen,
- mit mindestens einem Crashsensor (S),
- mit einem die Sensorsignale empfangenden und hinsichtlich Crash-Art und / oder Crash-Schwere auswertenden Auswerteeinheit (A), und
- mit mindestens zwei, voneinander getrennten, über das Fahrzeug (F) verteilten Zündeinheiten (B, G), deren (B, G) Schaltung jeweils, zur vorsorglichen Speicherung der für eine Zündung der ihnen (B, G) zugeordneten Sprengladung nötigen Energie, jeweils einen oder mehrere eigene Zündkondensatoren (E) enthalten, welche (E) ihrerseits je nach Bedarf die Schutzeinrichtungen, veranlaßt von der Auswerteeinheit (A), auslösen,
**dadurch gekennzeichnet,**
- daß die Anordnung ein die Auswerteeinheit (A) enthaltendes Auswertegerät (A) und mehrere, über das Fahrzeug (F) räumlich verteilte, die Zündeinheiten (B, G) einschließlich Zündkondensatoren (E) enthaltende Zündgeräte (B, G) enthält,
- daß der Crashsensor (S) / die Crashsensoren (S) nahe am oder im Auswertegerät (A) angebracht ist / sind, und
- daß die Leitung (D) zwischen dem Auswertegerät (A) und den Zündgeräten (B, G) eine Datenleitung (D) mit Zeitfenstern zur seriellen Übertragung von Ausgangssignalen der Auswerteeinheit (A) als digitale Daten ist.

2. Anordnung nach Patentanspruch 1,
**dadurch gekennzeichnet,**
- daß die Datenleitung (D) eine abgeschirmte elektrische Busleitung (D) zwischen dem Auswertegerät (A) und den Zündgeräten (B, G) ist, und
- daß die Zündkondensatoren (E) der Zündgeräte (B, G) die von ihnen zu speichernde Energie im Normalbetrieb des Fahrzeuges (F) über die Datenleitung (D) zugeführt erhalten.

3. Anordnung nach Patentanspruch 1 oder 2,
**dadurch gekennzeichnet,**
- daß der Crashsensor (S) und das Auswertegerät (A) im Lenkrad (L) angebracht sind.

4. Anordnung nach einem der vorhergehenden Patentansprüche, bevorzugt nach Patentanspruch 3,
**dadurch gekennzeichnet,**
- daß eines der Zündgeräte, das zur Auslösung des Airbag des Fahrers dient, im Lenkrad (L) unmittelbar neben oder im Auswertegerät (A) mitangebracht ist, und
- daß die übrigen, über die Datenleitung (D) angeschlossenen Zündgeräte (B, G) jeweils nahe den von ihnen auszulösenden Beifahrerairbags, Überrollbügeln und / oder Gurtstrammern angebracht sind.

5. Anordnung nach einem der vorhergehenden Patentansprüche,
**dadurch gekennzeichnet,**
- daß die Zeitfenster individuell einzelnen, von dem Auswertegerät (A) gesendeten, die Art und die Schwere des Crashes beschreibenden Kriterien zugeordnet sind.

6. Anordnung nach einem der vorhergehenden Patentansprüche,
**dadurch gekennzeichnet,**
- daß die Zündgeräte (B, G) zusätzlich eine Bewertungseinheit enthalten, welche individuell für das betreffende Zündgerät (B, G) die über die Datenleitung (D) empfangenen Daten daraufhin bewerten, ob und wann der zugeordnete Zündeinheit (E) die Schutzeinrichtung auslösen soll.

7. Anordnung Patentanspruch 6,
**dadurch gekennzeichnet,**
- daß die Auswerteeinheit (A) und die Bewertungseinheiten (in B und G) jeweils einen Mikroprozessor enthalten.

8. Anordnung nach einem der vorhergehenden Patentansprüche, bevorzugt nach Patentanspruch 6,
**dadurch gekennzeichnet,**
- daß nur ein einziger Crashsensor (S) angebracht ist, welcher (S) mehrrichtungsabhängig ist.

## Claims

1. Arrangement of devices (A, B, G) for the protection of occupants in a vehicle (F) whose occupants are to be protected in the event of a crash by a plurality of protective devices - for example airbags, overroll bars and/or seat-belt pretensioning devices - which can be actuated by means of an electrically detonated explosive charge,
- having at least one crash sensor (S),
- having an evaluation unit (A) which receives the sensor signals and evaluates with reference to the type of crash and/or severity of the crash, and
- having at least two, mutually separate detonator units (B, G) which are distributed over the vehicle (F) the circuit of which (B, G) in each case contains, for the purpose of precautionary storage of the energy required to detonate the explosive charge assigned to them (B, G), one or more dedicated detonating capacitors (E) which (E) for their part at the prompting of the evaluation unit (A) trigger the protective devices depending on need,
characterized in that
- the arrangement contains an evaluation device (A), containing the evaluation unit (A), and a plurality of detonating devices (B, G) which are spatially distributed over the vehicle (F) and contain the detonator units (B, G) including the detonating capacitors (E),
- the crash sensor (S) / the crash sensors (S) is/are mounted near or in the evaluation device (A), and
- the line (D) between the evaluation device (A) and the detonating devices (B, G) is a data line (D) having time windows for serial transmission of output signals of the evaluation unit (A) as digital data.

2. Arrangement according to Patent Claim 1, characterized in that
- the data line (D) is a screened electrical bus line (D) between the evaluation device (A) and the detonating devices (B, G), and
- the detonating capacitors (E) of the detonating devices (B, G) are fed the energy they are to store via the data line (D) in normal operation of the vehicle (F).

3. Arrangement according to Patent Claim 1 or 2, characterized in that
- the crash sensor (S) and the evaluation device (A) are mounted in the steering wheel (L).

4. Arrangement according to one of the preceding patent claims, preferably according to Patent Claim 3, characterized in that
- one of the detonating devices which serve to trigger the drivers airbag is also mounted in the steering wheel (L) immediately next to or in the evaluation device (A), and
- the remaining detonating devices (B, G) connected via the data line (D) are in each case mounted next to the passenger airbags, overroll bars and/or seatbelt pretensioning devices they are to trigger.

5. Arrangement according to one of the preceding patent claims, characterized in that
- the time windows are individually assigned individual criteria which are transmitted by the evaluation device (A) and describe the type and the severity of the crash.

6. Arrangement according to one of the preceding patent claims, characterized in that
- the detonating devices (B, G) additionally contain an assessment unit which assesses the data received via the data line (D) in an individual fashion for the relevant detonating device (B, G) as to whether and when the assigned detonating capacitor (E) is to trigger the protective device.

7. Arrangement according to Patent Claim 6, characterized in that
- the evaluation unit (A) and the assessment units (in B and G) in each case contain a microprocessor.

8. Arrangement according to one of the preceding patent claims, preferably according to Patent Claim 6, characterized in that
- only a single crash sensor (S) is mounted, which (S) is multidirectionally dependent.

## Revendications

1. Agencement d'appareils (A,B,G) pour la protection des passagers d'un véhicule (F), qui doivent être protégés, lors d'une collision, par plusieurs dispositifs de protection pouvant être activés au moyen d'une charge explosive amorcée électriquement - par exemple des airbags, des arceaux de sécurité et/ou des enrouleurs de ceintures -, comportant
- au moins un détecteur de collision (S),
- une unité d'évaluation (A) recevant les signaux du capteur et évaluant le type de collision et/ou la gravité de la collision, et
- au moins deux unités d'amorçage (B,G), qui indépendantes, qui sont réparties dans le véhicule (F) et dont le circuit contient, pour le stockage préalable de l'énergie nécessaire pour un amorçage de la charge explosive qui est associée à ces unités (B,G), respectivement un ou plusieurs condensateurs d'amorçage propres (E), qui, pour leur part, déclenchent, en cas de besoin, les dispositifs de protection, en étant activés par l'unité d'évaluation (A),
caractérisé par le fait
- que l'agencement contient un appareil d'évaluation (A), qui contient l'unité d'évaluation (A), et plusieurs appareils d'amorçage (B,G), qui sont répartis spatialement dans le véhicule (F) et qui contiennent les unités d'amorçage (B,G) y compris les condensateurs d'amorçage (E),
- que le détecteur de collision (S)/les détecteurs de collision (S) est/sont disposé(s) à proximité de ou dans l'appareil d'évaluation (A), et
- que la ligne (D) située entre l'appareil d'évaluation (A) et les appareils d'amorçage (B,G) est une ligne de transmission de données (D) avec des créneaux temporels pour la transmission en série de signaux de sortie de l'unité d'évaluation (A) en tant que données numériques.

2. Agencement suivant la revendication 1, caractérisé par le fait
- que la ligne de transmission de données (D) est une ligne formant bus électrique blindée (D) entre l'appareil d'évaluation (A) et les appareils d'amorçage (B,G), et
- que les condensateurs d'amorçage (E) des appareils d'amorçage (B,G) reçoivent l'énergie, qui est stockée pour eux, par l'intermédiaire de la ligne de transmission de données (D), pendant le fonctionnement normal du véhicule (M).

3. Agencement suivant la revendication 1 ou 2, caractérisé par le fait
- que le capteur de collision (S) et l'appareil d'évaluation (A) sont montés dans le volant (L).

4. Agencement suivant l'une des revendications précédentes, de préférence suivant la revendication 3, caractérisé par le fait
- que l'un des appareils d'amorçage, qui sert à déclencher l'airbag du conducteur, est monté conjointement dans le volant (L) directement à côté de l'appareil d'évaluation (A), ou dans celui-ci et
- que les autres appareils d'amorçage (B,G) raccordés par l'intermédiaire de la ligne de transmission de données (D) sont montés à proximité de l'airbag du passager, des arceaux de sécurité et/ou des enrouleurs de ceintures, qui doivent être déclenchés par ces appareils d'amorçage.

5. Agencement suivant l'une des revendications précédentes, caractérisé par le fait
- que les créneaux temporels sont associés individuellement à divers critères qui sont émis par l'appareil d'évaluation (A) et qui décrivent le type et la gravité de la collision.

6. Agencement suivant l'une des revendications précédentes, caractérisé par le fait
- que les appareils d'amorçage (B,G) contiennent en supplément une unité d'évaluation, qui évalue individuellement, pour l'appareil d' amorçage concerné (B,G), les données reçues par l'intermédiaire de la ligne de transmission de données (D), pour déterminer si et quand le condensateur d'amorçage associé (D) doit déclencher le dispositif de protection.

7. Agencement suivant la revendication 6, caractérisé par le fait
- que l'unité d'évaluation (A) et les unités d'évaluation (dans B et G) contiennent chacune un microprocesseur.

8. Agencement suivant l'une des revendications précédentes, de préférence suivant la revendication 6, caractérisé par le fait
- qu'un seul détecteur de collision (S), dont le fonctionnement dépend de plusieurs directions, est installé.
